# EUROPÄISCHE PATENTSCHRIFT

(11) **EP 2 543 491 B1**
(45) Veröffentlichungstag und Bekanntmachung des Hinweises auf die Patenterteilung: **23.11.2016**
(21) Anmeldenummer: 12175072.3
(22) Anmeldetag: 05.07.2012
(51) Int. Cl.: B29C 45/16, F16L 23/032, F16L 47/14, F16L 23/026, B29L 31/24

(54) **Sandwich-Spritzgießverfahren und Festflansch**
Sandwich injection moulding method and fixed flange
Procédé de moulage par injection en sandwich et bride fixe

(30) Priorität: 05.07.2011 AT 9812011
(43) Veröffentlichungstag der Anmeldung: 09.01.2013
(73) Patentinhaber: Praher Plastics Austria GmbH, 4311 Schwertberg (AT)
(72) Erfinder: Praher, Winfried, Ing., 4320 Perg (AT); Pühringer, Rainer, Dr., 4040 Steyregg-Plesching (AT)
(74) Vertreter: Jell, Friedrich

(56) Entgegenhaltungen:
- EP-A2- 1 632 380
- US-A1- 2003 037 831
- US-A1- 2006 197 341

## Beschreibung

Die Erfindung betrifft einen Festflansch mit einem im Sandwich-Spritzgießverfahren hergestellten mindestens eine Angussstelle aufweisenden Schichtverbund, der zumindest bereichsweise eine Kernschicht, die vorzugsweise aus einem insbesondere faserverstärkten Thermoplast besteht, und wenigstens eine, die Kernschicht abdeckende, aus einem Thermoplast bestehende Deckschicht umfasst, wobei die Kernschicht gegenüber der Deckschicht eine höhere mechanische Festigkeit aufweist, mit einem Flanschbund und mit einem wenigstens eine Fügefläche ausbildenden Schweißanschluss.

Um Festflansche aus einem trinkwassertauglichen Kunststoffmaterial herzustellen und trotzdem eine vergleichsweise dauerhafte Form- und Druckbeständigkeit bieten zu können, ist es aus dem Stand der Technik bekannt, Festflansche mit Stahleinlagen an deren Flanschbund zu versehen. Nachteilig sind derartige Flansche mit einer Stahlbewehrung sind jedoch vergleichsweise konstruktiv aufwendig und kostenintensiv herzustellen.

Des Weiteren sind aus dem Stand der Technik ein Sandwich-Spritzgießverfahren (US2003/0037831 A1) sowie ein Sandwich-Spritzgießverfahren für Fittings bekannt (US2006/0249216A1), was gegenüber Stahleinlagen hinsichtlich der Produktionskosten günstiger sein kann. Bei solch einem Herstellungsverfahren wird das Fitting mit einer Kernschicht mit einem faserverstärkten Thermoplast versehen, um damit die mechanische Stabilität zu verbessern. Diese Kernschicht kann beispielsweise mit einer Deckschicht aus einem trinkwassertauglichen Thermoplast überzogen werden. Derartige Fittings haben sich beim stoffschlüssigen Verbinden mit anderen Teilen jedoch als nachteilig herausgestellt. Neben einer vergleichsweise schweren Schweißbarkeit kann es dabei nämlich auch zu einem Aufbrechen der Kernschicht kommen, wenn die Fügeflächen eines Schweißanschlusses plastifiziert werden, was zu einer Schwächung des Schweißanschlusses und damit zu einer Verringerung der Standfestigkeit des Fittings führen kann. Ein derartiger Schichtaufbau ist daher für Formteile, zum Beispiel Festflansche, die neben einer erheblichen Belastungsfähigkeit auch einen Schweißanschluss mit standfesten Fügeflächen zu gewährleisten haben, nicht geeignet.

Auch ist es bei Apparateflanschen bekannt (EP1632380A2), einen Schichtverbund mit einer Kernschicht und mit einer Deckschicht herzustellen, die teilweise die Kernschicht abdeckt. Trotz verschiedenster Schichtaufbauten unterliegt dieser Apparateflansch nachteilig erhöhten Korrosionsbelastungen. Ein standfester Flansch kann damit nicht geschaffen werden.

Die Erfindung hat sich daher die Aufgabe gestellt, einen Festflansch der eingangs geschilderten Art derart zu verbessern, dass trotz konstruktiver Einfachheit und niedriger Herstellungskosten hohen mechanischen Belastungen sicher standgehalten werden kann.

Die Erfindung löst die gestellte Aufgabe hinsichtlich des Festflansches dadurch, dass der Festflansch im Bereich seiner für das Schweißen plastifizierbaren Fügefläche im Wesentlichen aus der Deckschicht und im Bereich seines Flanschbunds im Wesentlichen aus dem Schichtverbund besteht, wobei die Angussstelle des Schichtverbunds außerhalb des flüssigkeitsführenden Teils des Festflansches vorgesehen ist.

Besteht der Festflansch im Bereich seiner für das Schweißen plastifizierbaren Fügefläche im Wesentlichen aus der Deckschicht und im Bereich seines Flanschbunds im Wesentlichen aus dem Schichtverbund, kann auf konstruktiv einfache Weise im Bereich des Schweißanschlusses nicht nur eine einfach handhabbare Fügefläche bzw. stoffschlüssige Anschlussmöglichkeit geschaffen, sondern damit auch eine standfeste Schweißverbindung sichergestellt werden. Ein Aufbrechen des Schichtverbunds beim stoffschlüssigen Verbinden des Festflansches kann nämlich durch den wesentlichen Anteil an Deckschicht vermieden werden, wodurch auch am Flanschbund keine Beeinträchtigung der Festigkeit zu befürchten ist. Der Flanschbund kann daher standfest hohe Biegebelastungen aufnehmen. Der Schweißanschluss weist daher eine derart dicke Deckschicht auf, dass eine ausreichende Schmelzschichtdicke der plastifizierbaren Fügefläche zur Verfügung steht. Dadurch kann sich eine einfache Handhabbarkeit des Festflansches beim Schweißen, ein sicherer Schweißanschluss zwischen Festflansch und den angeschweißten Mitteln, als auch eine vergleichsweise hohe Standfestigkeit des Festflansches ausbilden. Diese Standfestigkeit des Festflansches kann auch sicher gewährleistet werden wenn die Angussstelle des Schichtverbunds außerhalb des flüssigkeitsführenden Teils des Festflansches vorgesehen ist. Es kann dadurch nämlich eine homogene thermoplastische Deckschicht mit einer vergleichsweise hohen chemischen Korrosionsbeständigkeit ermöglicht werden, weil durch die Lage der Angussstelle die Kernschicht gegenüber dem durch den Festflansch geleiteten Medium geschützt werden kann. Der erfindungsgemäße Festflansch ist daher auch gegenüber Alterungserscheinungen bzw. Korrosion vergleichsweise standfest. Zusätzlich ist der erfindungsgemäße Festflansch kostengünstiger in seiner Herstellung, als dies von Festflanschen mit Stahleinlagen (formschlüssiger Aufbau) bekannt ist. Der Schichtverbund kann in seiner Standfestigkeit noch weiter verbessert werden, indem die Kernschicht aus einem Thermoplast besteht. Ein faserverstärktes Thermoplast kann zusätzlich eine besonders hohe mechanische Festigkeit ermöglichen. So kann eine vergleichsweise hohe Form und Druckbeständigkeit des Festflansches erreicht werden. Außerdem haben sich faserverstärkte Thermoplaste unproblematisch bei der Herstellung des Festflansches ausgezeichnet. Kostengünstige Festflansche können so geschaffen werden. Im Allgemeinen wird erwähnt, dass für die Kernschicht auch modifizierte Thermoplaste vorstellbar sind. Vorteilhaft für den Schichtverbund sind die Kunststoffe von Deckschicht und Kernschicht gleich, lediglich die Kernschicht weist gegenüber der Deckschicht zusätzlich eine Faserverstärkung auf.

Im Allgemeinen wird erwähnt, dass verschiedenste Schweißarten vorstellbar sind. Beispielsweise wird Heizelementschweißen, Vibrationsschweißen, Ultraschallschweißen oder Rotationsschweißen erwähnt. Weiter wird im Allgemeinen erwähnt, dass sich eine Angussstelle des Schichtverbunds außerhalb der für das Schweißen plastifizierbaren Fügefläche des Schweißanschlusses ebenso als vorteilhaft herausstellen kann.

Der Festflansch kann sich besonders für eine Serienfertigung auszeichnen, wenn der gegenüber dem Flanschbund schlanker ausgeführte Schweißanschluss an den Flanschbund zumindest teilweise anschließt. Durch die schlankere Ausführung des Schweißanschlusses kann nämlich beim Sandwich-Spritzgießverfahren reproduzierbar sichergestellt werden, dass sich beim Schweißanschluss im Wesentlichen Deckschicht ansammelt, bevor das Kernmaterial verwendet wird. Ein kostengünstiger, schweißbarer Festflansch kann dadurch sichergestellt werden.

Für vergleichsweise hohe Schweißbarkeit und dennoch ausgezeichnete Tauglichkeit im Zusammenhang mit Trinkwasser, kann sich als Deckschicht ein PP-H (Polypropylen-Homopolymer) Werkstoff auszeichnen. Außerdem kann solch eine Deckschicht eine besonders hohe chemische Beständigkeit gewährleisten.

Weist der Festflansch am Flanschbund eine Angussstelle vom Sandwich-Spritzgießverfahren auf, dann kann auf konstruktiv einfache Weise verhindert werden, dass das Kernmaterial mit flüssigkeitsführenden Bereichen des Festflansches in Kontakt treten und damit beispielsweise durch Korrosion geschwächt werden kann. Außerdem bietet der Flanschbund aufgrund seiner Abmessungen eine einfache Möglichkeit, die Angussstelle vorzusehen. Vorzugsweise ist ausschließlich am Flanschbund die Angussstelle vorgesehen, was die Handhabung des Festflansches vereinfachen kann.

Befindet sich im Bereich der Dichtfläche am Flanschbund eine Angussstelle, kann durch ein Vorsehen einer eventuellen Dichtung diese im Bereich des Angusses vortretende Kernschicht sogar abgedichtet und damit auch gegenüber Korrosion durch geführte Flüssigkeit oder durch Einflüsse geschützt werden. Selbst im Angussbereich kann damit eine Beschädigung des Kernmaterials auf elegante Weise verhindert werden, was zu einem besonders standfesten Festflansch führen kann.

Der Flanschbund kann im Bereich der Angussstelle mindestens eine Ausnehmung für eine Dichtung aufweisen, um damit eine Haftung und/oder Pressung der Dichtung auf konstruktiv einfache Weise erhöhen zu können.

Ist die Deckschicht des Flanschbunds wenigstens im Bereich der Schraubauflage des Schraubanschlusses gegenüber einem daran anschließenden Bereich in ihrer Schichtdicke reduziert, kann die Steifigkeit des Schichtverbunds im Bereich der Schaubauflage erhöht werden. Der erfindungsgemäße Schraubanschluss kann daher trotz eines Schichtverbunds in diesem Bereich einen form- und kraftschlüssigen Verbund standfest sicherstellen.

Für ausreichende Kernschichtdicke kann gesorgt werden, wenn der Schichtverbund des Flanschbunds wenigstens im Bereich der Schraubauflage des Schraubanschlusses gegenüber einem daran anschließenden Bereich eine erhöhte Schichtdicke aufweist. Ein mechanisch hoch belastbarer Festflansch kann damit geschaffen werden.

Die Standfestigkeit des Festflansches kann noch weiter verbessert werden, wenn die Deckschicht die Kernschicht im flüssigkeitsführenden Teil des Festflansches vollständig abgedeckt.

Es ist weiter Aufgabe der Erfindung, ein einfach handhabbares Sandwich-Spritzgießverfahren für einen Festflansch zu schaffen, mit dem auch eine besonders gute Schweißbarkeit ermöglicht wird, ohne damit ein Aufbrechen der Kernschicht befürchten zu müssen.

Die Erfindung löst die gestellte Aufgabe hinsichtlich des Sandwich-Spritzgießverfahrens dadurch, dass der dem Schweißanschluss zugehörige Kavitätsteil zumindest bereichsweise während der Ausbildung der Deckschicht mit Thermoplast im Wesentlichen gefüllt wird, wobei die Kavität in Bereichen außerhalb des flüssigkeitsführenden Teils des Festflansches angegossen wird.

Wird ein Festflansch mit einem Flanschbund und mit einem Schweißanschluss hergestellt, wobei der dem Schweißanschluss zugehörige Kavitätsteil zumindest bereichsweise während der Ausbildung der Deckschicht mit Thermoplast im Wesentlichen gefüllt wird, kann ein einfach handhabbares Verfahren ermöglicht werden, das reproduzierbar im Bereich des Schweißanschlusses eine besonders gute Eignung des Festflansches zur stoffschlüssigen Verbindbarkeit sicherstellen kann. Der Kavitätsteil mit dem Schweißanschluss wird sich nämlich stets mit Deckschicht füllen, bevor die Kernschicht die Kavität weiter füllt. Im Schweißanschluss kann daher im Wesentlichen die Deckschicht sichergestellt werden, so dass mit dem erfindungsgemäßen Verfahren besonders standfeste und dennoch sicher schweißbare Festflansche kostengünstig hergestellt werden können. Kommt noch hinzu, dass die Kavität in Bereichen außerhalb des flüssigkeitsführenden Teils des Festflansches angegossen wird, kann zusätzlich im Bereich des Schweißanschlusses eine Ansammlung von Kernmaterial vermieden werden. Außerdem wird dadurch sichergestellt, dass das Kernmaterial nicht in flüssigkeitsführenden Bereichen des Festflansches austreten kann.

Der Flanschbund kann mit einem Schraubanschluss verfahrenstechnisch einfach versehen werden, wenn in diesen Löcher eingebracht werden.

Wird beim oder nach dem Abtrennen des Angusses im Bereich des Angusses eine Ausnehmung eingebracht, kann der vergleichsweise festere Bereich zur passgenauen Ausbildung der Ausnehmung beitragen. Das nachfolgende Versehen der Ausnehmung mit einer Dichtung kann dadurch deutlich erleichtert werden. Einfache Verfahrensverhältnisse zur Erhöhung der Standfestigkeit des Festflansches gegenüber Korrosion können sich ergeben, wenn nach dem Einbringen des Thermoplasts der Kernschicht nochmals Thermoplast der Deckschicht eingebracht wird, um die Kernschicht zu versiegeln. Dies kann eine kostengünstige Herstellung eines besonders korrosionsbeständigen Festflansches ermöglichen.

In den Figuren ist beispielsweise der Erfindungsgegenstand anhand von Ausführungsbeispielen dargestellt. Es zeigen
- Fig. 1: eine abgerissene Schnittansicht auf einen erfindungsgemäßen Festflansch,
- Fig. 2: eine Draufsicht auf den Festflansch nach Fig. 1,
- Fig. 3: eine vergrößerte Teilansicht auf den Festflansch nach Fig. 1,
- Fig. 4: eine vergrößerte Teilansicht auf den Festflansch nach Fig. 1 mit einem angeschweißten Rohr,
- Fig. 5: eine vergrößerte Teilansicht auf die Dichtfläche des Festflansches nach Fig. 2,
- Fig. 6: eine Schnittansicht durch den Schraubanschluss des nach Fig. 1 dargestellten Festflansches und
- Fig. 7: eine Schnittansicht des nach Fig. 1 dargestellten Festflansches mit einem Anguss.

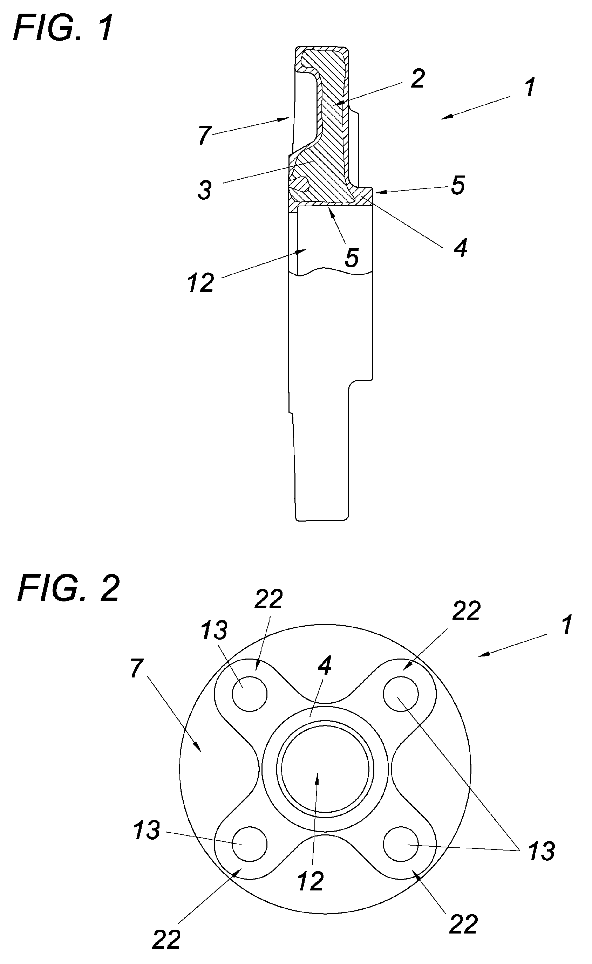

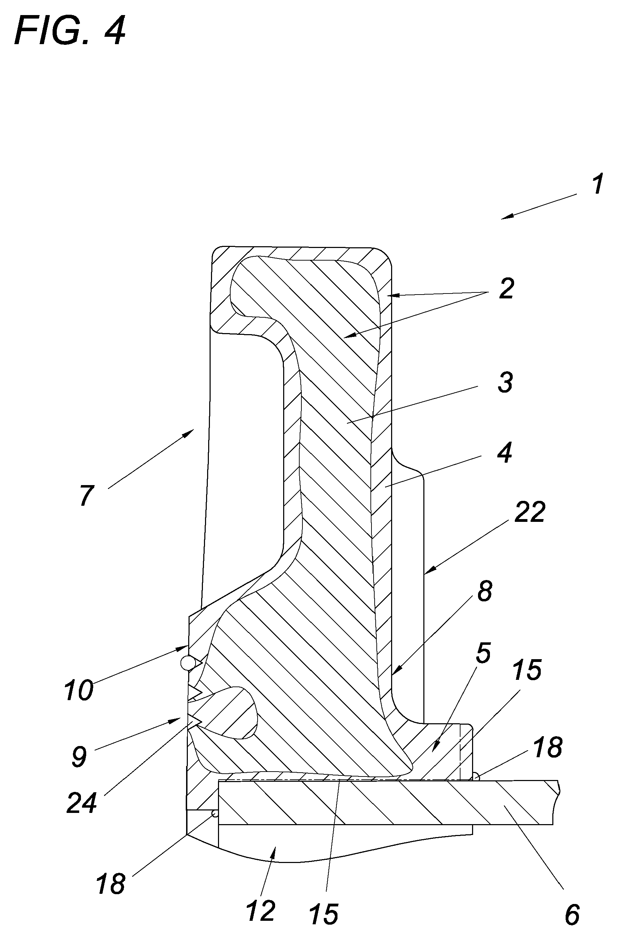

Das nach Fig. 1 dargestellte Formteil ist als Festflansch 1 ausgeführt und weist einen Schichtverbund 2 auf, der durch ein nicht näher dargestelltes Sandwich-Spritzgießverfahren geschaffen wird. Solch ein auch als Coinjection- oder Sequenz-Verfahren bezeichnetes Mehrkomponenten-Spritzgießen führt zu einen Festflansch 1, der zumindest bereichsweise eine Kernschicht 3 und mit wenigstens eine, die Kernschicht 3 abdeckende, aus einem Thermoplast bestehende Deckschicht 4 umfasst. Um nun hohe mechanische Festigkeit mit den Vorteilen des Leichtbaus zu verbinden, ist die Kernschicht 3 gegenüber der Deckschicht 4 mechanisch fester ausgebildet. Der Festflansch 1 weist auch einen Schweißanschluss 5 bzw. Rohransatz auf, über den der Festflansch 1 mit einem Kunststoffrohr 6 stoffschlüssig verbunden werden kann, welches Kunststoffrohr 6 beispielsweise in der Fig. 4 dargestellt ist. Um nun trotz eines Mehrschichtverbunds 2 eine sichere Schweißverbindung zu ermöglichen, besteht der schichtverbundene Festflansch 1 im Bereich seiner für das Schweißen plastifizierbaren Fügefläche 14 im Wesentlichen aus der Deckschicht 4 und im Bereich seines Flanschbunds 7 im Wesentlichen aus dem Schichtverbund 2. Vor Korrosion kann die Kernschicht besonders gut geschützt werden, indem die Angussstelle 9 des Schichtverbunds 2 außerhalb des flüssigkeitsführenden Teils des Festflansches 1. Da die Angussstelle 9 des Schichtverbunds 2 auch außerhalb der plastifizierbaren Fügefläche 14 vorgesehen ist, kann eine Beeinträchtigung der stoffschlüssigen Verbindung zwischen Kunststoffrohr 6 und Festflansch 1 ausgeschlossen werden.

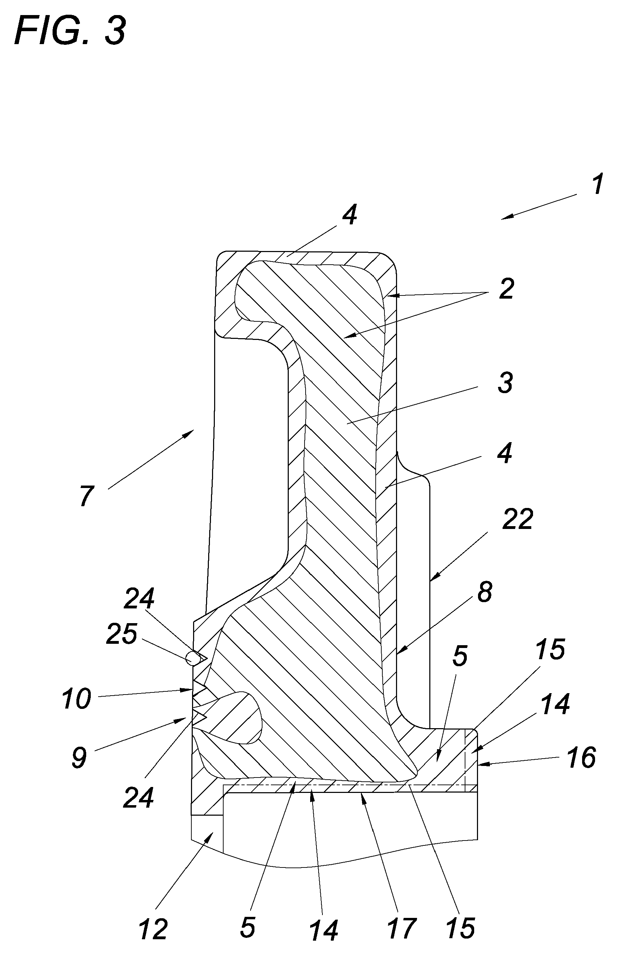

So ist der Fig. 3 zu entnehmen, dass Schweißanschluss 5 im Wesentlichen aus der Deckschicht 4 besteht, welche Deckschicht 4 als Thermoplast vergleichsweise gut schweißbar ist. Die Kernschicht 3 dringt in diesen Bereich unwesentlich vor, wodurch für beide Fügeflächen 14, eine ausreichende dicke Schmelzschicht 15 zur Verfügung gestellt werden kann. Damit kann ein standfester Stumpf 16 sowie Muffe 17 für Fügezwecke ermöglicht werden, wie dies beispielsweise in der Fig. 4 verdeutlicht worden ist. Dadurch kann gewährleistet werden, dass die Kernschicht 3 selbst mit einer Schweißverbindung zwischen Festflansch 1 und Rohr 6 nicht aufgebrochen werden kann, so dass in diesem Bereich die Kernschicht 3 auch keine Oberfläche 8 des Festflansches 1 ausbilden kann. Auch sind in Fig. 4 Wulste 18 zu erkennen, die durch eine verdrängte Deckschicht 4 bzw. durch die reduzierte Schmelzschicht 15 der Fügefläche 14 beim Schweißen gebildet werden, die Kernschicht wird jedoch durch dieses Schweißen nicht aufgebrochen. Die Gefahr einer Beschädigung der Kernschicht 3 durch äußere Einflüsse kann daher deutlich verringert werden, wodurch vergleichsweise hohen mechanischen und chemischen Belastungen standgehalten werden kann.

Der Schweißanschluss 5 ist gegenüber dem Flanschbund 7 schlanker ausgeführt. Diese gegenüber dem Flanschbund 7 geringere Dicke des Schweißanschlusses 5 kann besonders vorteilhaft bei einer Serienfertigung des Festflansches 1 sein, wenn der Schweißanschluss 5 zusätzlich am Flanschbund zumindest teilweise anschließt. Beim Sandwich-Spritzgießverfahren wird nämlich in eine nicht näher dargestellte Spritzgießform über wenigstens eine Angussstelle 9 ein Thermoplast zur Ausbildung einer Deckschicht 4 sowie in weiterer Folge ein gegenüber diesem Thermoplast mechanisch festeres Thermoplast zur Ausbildung einer Kernschicht 3 eingebracht. Ist nun der Schweißanschluss 5 dem Flanschbund 7 anschließend vorgesehen, kann unter anderem sichergestellt werden, dass während der Ausbildung der Deckschicht 4 der Schweißanschluss 5 im Wesentlichen mit dieser Deckschicht 4 gefüllt wird. Damit kann die Reproduzierbarkeit des Verfahrens verbessert werden.

Einfache Verfahrensbedingungen sowie besonders gute mechanische Eigenschaften können sich ergeben, wenn die Kernschicht 3 aus einem faserverstärkten Thermoplast und die Deckschicht 4 aus PP-H besteht.

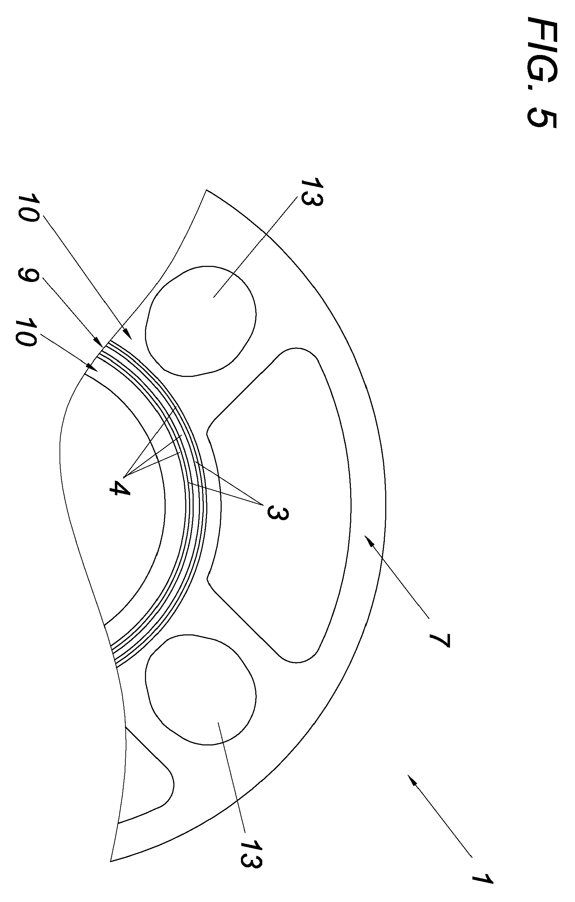

Da im Bereich der Angussstellte Angussstelle 9 die Kernschicht 3 zwangsweise an die Oberfläche 8 des Formteils tritt, ist es von besonderer Wichtigkeit, diese Stelle vor Korrosion zu schützen. Aus diesem Grund wird die Angussstelle 9 im Bereich der Dichtfläche 10 am Flanschbund 7 vorgesehen, wie dies insbesondere in der Fig. 5 näher dargestellt worden ist. Da in diesem Bereich aufgrund des funktionsbedingten dichten Anschlusses des Festflansches 1 an ein Anschlussstück mit einer besonders dichten Abdeckung der Kernschicht 3 zu rechnen ist, kann der Festflansch 1 in allen Anwendungsbereichen bedenkenlos eingesetzt werden. Außerdem befindet sich in diesem Bereich sehr häufig eine nicht näher dargestellte Profilflanschdichtung, die für einen zusätzlichen Schutz der Kernschicht 3 sorgen kann.

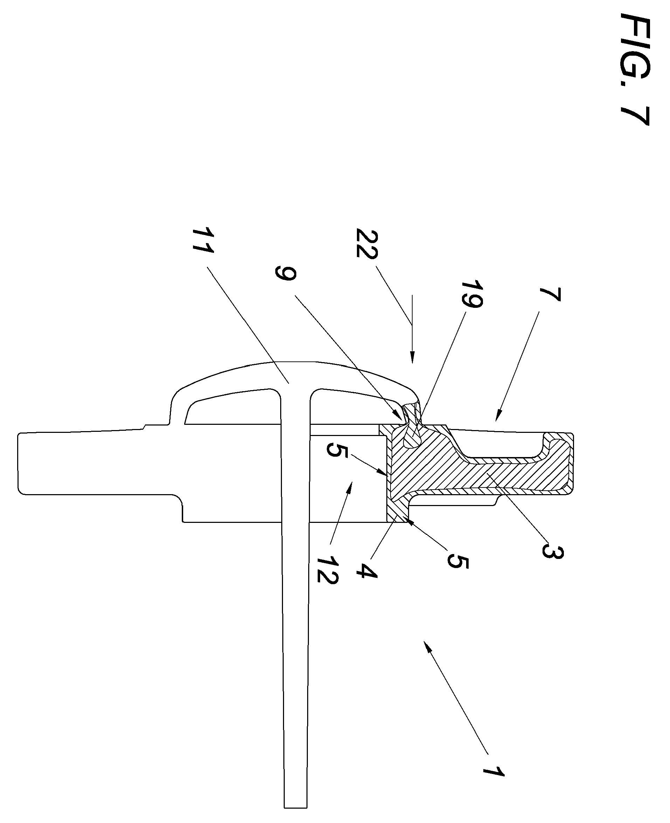

Wie in der Fig. 7 insbesondere zu entnehmen ist, kann durch die besondere Wahl der Angussstelle 9 bzw. der Ausführung des Angusses 11 auf einfache Weise gewährleistete werden, dass im flüssigkeitsführenden Teil 12 des Festflansches 1 die Kernschicht 3 von der Deckschicht 4 vollständig abgedeckt wird. Die Kernschicht 3 kann so vom Fließbereich des Festflansches 1 fern gehalten werden. Dies kann eine vergleichsweise hohe chemische Korrosionsbeständigkeit des Festflansches 1 gewährleisten. Beispielsweise kann im Falle von einem faserverstärkten Thermoplast als Kernschicht 3 die Gefahr eines Auflösens des Haftvermittlers der Kernschicht 3 klein gehalten werden, wodurch eine Schwächung des Faserverbunds der Kernschicht 3 vermieden werden kann. Ein standfester Festflansch 1 kann so geschaffen werden.

In Fig. 3 ist auch zu erkennen, dass der Flanschbund 7 im Bereich der Angussstelle 9 mehrere Ausnehmung 24 aufweist. Durch den Nahbereich zur Kernschicht 3 erbeben sich hier besonders vorteilhafte Pressverhältnisse für die Dichtung 25.

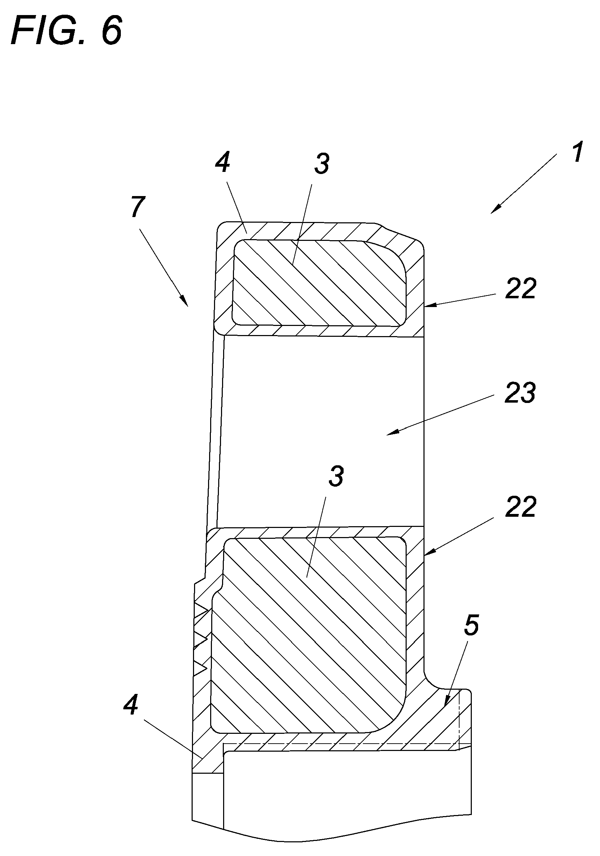

Nach Fig. 6 ist der Schaubanschluss 23 näher dargestellt. Wie gegenüber der Fig. 3 zu erkennen, ist die Deckschicht 4 des Flanschbunds 7 im Bereich der Schraubauflage 22 des Schraubanschlusses 23 gegenüber einem daran radial anschließenden Bereich in ihrer Schichtdicke reduziert. Damit ist ein hoher Eindruckwiderstand für die Schraubverbindungen geschaffen. Außerdem weist der Schichtverbund 2 des Flanschbunds 7 wenigstens im Bereich der Schraubauflage 22 des Schraubanschlusses 23 gegenüber einem daran radial anschließenden Bereich, der nach Fig. 3 dargestellt ist, eine erhöhte Schichtdicke auf. Damit ist ein mechanisch äußerst belastbarer Schaubanschluss 23 geschaffen.

Um zu einem Festflansch 1 nach Fig. 1 zu kommen, muss lediglich der in Fig. 7 dargestellte Anguss 11 abgetrennt werden, nachdem die Angussstelle 9 einer Versiegelung 19 unterworfen worden ist. Außerdem sind in den Figuren 2 und 4 gebohrte Löcher 13 für nicht näher dargestellte Befestigungsschrauben vorgesehen, um damit den Flanschbund 7 zu befestigen.

Solch eine Herstellung eines Festflansches 1 nach Fig. 3 kann auf einfache Weise ermöglicht werden, indem der dem Schweißanschluss 5 zugehörige Kavitätsteil während der Ausbildung der Deckschicht mit Thermoplast im Wesentlichen gefüllt wird. Dies kann insbesondere der Fig. 7 entnommen werden. Hier ist zu erkennen, dass der Schweißanschluss 5 im Wesentlichen aus der Deckschicht 4 besteht, da dort vergleichsweise viel Thermoplast eingedrückt wird.

## Patentansprüche

1. Festflansch mit einem im Sandwich-Spritzgießverfahren hergestellten mindestens eine Angussstelle (9) aufweisenden Schichtverbund (2), der zumindest bereichsweise eine Kernschicht (3), die vorzugsweise aus einem insbesondere faserverstärkten Thermoplast besteht, und wenigstens eine, die Kernschicht (3) abdeckende, aus einem Thermoplast bestehende Deckschicht (4) umfasst, wobei die Kernschicht (3) gegenüber der Deckschicht (4) eine höhere mechanische Festigkeit aufweist, mit einem Flanschbund (7) und mit einem wenigstens eine Fügefläche (14) ausbildenden Schweißanschluss (5), wobei der Festflansch (1) im Bereich seiner für das Schweißen plastifizierbaren Fügefläche (14) im Wesentlichen aus der Deckschicht (4) und im Bereich seines Flanschbunds (7) im Wesentlichen aus dem Schichtverbund (2) besteht, wobei die Angussstelle (9) des Schichtverbunds (2) außerhalb des flüssigkeitsführenden Teils des Festflansches (1) vorgesehen ist, **dadurch gekennzeichnet, dass** sich die Angussstelle (9) im Bereich der Dichtfläche (10) am Flanschbund (7) befindet.

2. Festflansch nach Anspruch 1, **dadurch gekennzeichnet, dass** der gegenüber dem Flanschbund (7) schlanker ausgeführte Schweißanschluss (5) an den Flanschbund (7) zumindest teilweise anschließt.

3. Festflansch nach Anspruch 1 oder 2, **dadurch gekennzeichnet, dass** die Deckschicht (4) aus PP-H besteht.

4. Festflansch nach Anspruch 1, 2 oder 3, **dadurch gekennzeichnet**, der Festflansch (1) eine Dichtung (25) aufweist, die die im Bereich des Angusses vortretende Kernschicht (3) abdichtet.

5. Festflansch nach einem der Ansprüche 1 bis 4, **dadurch gekennzeichnet, dass** der Flanschbund (7) im Bereich der Angussstelle (9) mindestens eine Ausnehmung (24) für die Dichtung (25) aufweist.

6. Festflansch nach einem der Ansprüche 1 bis 5, **dadurch gekennzeichnet, dass** die Deckschicht (4) des Flanschbunds (7) wenigstens im Bereich der Schraubauflage (22) des Schraubanschlusses (23) gegenüber einem daran anschließenden Bereich in ihrer Schichtdicke reduziert ist.

7. Festflansch nach einem der Ansprüche 1 bis 6, **dadurch gekennzeichnet, dass** der Schichtverbund (2) des Flanschbunds (7) wenigstens im Bereich der Schraubauflage (22) des Schraubanschlusses (23) gegenüber einem daran anschließenden Bereich eine erhöhte Schichtdicke aufweist.

8. Festflansch nach einem der Ansprüche 1 bis 7, **dadurch gekennzeichnet, dass** die Deckschicht (4) die Kernschicht (3) im flüssigkeitsführenden Teil (12) des Festflansches (1) vollständig abgedeckt.

9. Sandwich-Spritzgießverfahren zur Herstellung eines Festflansches (1) mit einem Flanschbund (7) und mit einem Schweißanschluss (5) nach einem der Ansprüche 1 bis 8, bei dem in eine Spritzgießform über wenigstens eine Angussstelle (9) ein Thermoplast zur Ausbildung einer Deckschicht (4) des Festflansches (1) sowie in weiterer Folge ein gegenüber diesem Thermoplast mechanisch festeres, insbesondere faserverstärktes, Thermoplast zur Ausbildung einer Kernschicht (3) des Festflansches (1) insbesondere in die plastische Seele der Deckschicht (4) eingebracht wird, wobei der dem Schweißanschluss (5) zugehörige Kavitätsteil zumindest bereichsweise während der Ausbildung der Deckschicht (4) mit Thermoplast im Wesentlichen gefüllt wird, wobei die Kavität in Bereichen außerhalb des flüssigkeitsführenden Teils des Festflansches (1) angegossen wird, **dadurch gekennzeichnet, dass** die Kavität im Bereich der Dichtfläche (10) am Flanschbund (7) des Festflansches (1) angegossen wird.

10. Sandwich-Spritzgießverfahren nach Anspruch 9, **dadurch gekennzeichnet, dass** in den Flanschbund (7) Löcher (13) zur Ausbildung eines Schraubanschlusses (23) eingebracht werden.

11. Sandwich-Spritzgießverfahren nach Anspruch 9 oder 10, **dadurch gekennzeichnet, dass** beim oder nach dem Abtrennen des Angusses (9) im Bereich des Angusses (9) eine Ausnehmung (24) eingebracht wird, die mit einer Dichtung (25) versehen wird.

12. Sandwich-Spritzgießverfahren nach Anspruch 9, 10 oder 11, **dadurch gekennzeichnet, dass** nach dem Einbringen des Thermoplasts der Kernschicht (3) nochmals Thermoplast der Deckschicht (4) eingebracht wird, um die Kernschicht (3) zu versiegeln.

## Claims

1. Fixed flange comprising a layer composite (2) having at least one gate mark (9) manufactured in the sandwich injection moulding method, comprising a core layer (3), at least in certain regions, which preferably consists of an in particular fibre-reinforced thermoplastic material, and at least one cover layer (4) which covers the core layer (3) and consists of a thermoplastic material, wherein the core layer (3) has a higher mechanical strength compared with the cover layer (4), comprising a flange collar (7) and a weld connection (5) forming at least one joint surface (14), wherein the fixed flange (1) substantially consists of the cover layer (4) in the region of the joint surface (14) which can be plasticized for welding and substantially consists of the layer composite (2) in the region of its flange collar (7),wherein the gate mark (9) of the layer composite (2) is provided outside the liquid-carrying portion of the fixed flange (1), **characterized in that** the gate mark (9) is located in the area of the sealing surface (10) on the flange collar (7).

2. The fixed flange according to claim 1, **characterized in that** the weld connection (5) designed to be narrower compared with the flange collar (7) adjoins the flange collar (7) at least partially.

3. The fixed flange according to claim 1 or 2, **characterized in that** the cover layer (4) consists of PP-H.

4. The fixed flange according to claim 1, 2 or 3, **characterized in that** the fixed flange (1) has a seal (25) which seals the core layer (3) protruding in the area of the gate.

5. The fixed flange according to any one of claims 1 to 4, **characterized in that** the flange collar (7) has at least one recess (24) for the seal (25) in the region of the gate mark (9).

6. The fixed flange according to any one of claims 1 to 5, **characterized in that** the cover layer (4) of the flange collar (7) is reduced in its layer thickness compared with an adjoining region at least in the region of the screw support (22) of the screw connection (23).

7. The fixed flange according to any one of claims 1 to 6, **characterized in that** the layer composite (2) of the flange collar (7) has an increased layer thickness compared with an adjoining region at least in the region of the screw support (22) of the screw connection (23).

8. The fixed flange according to any one of claims 1 to 7, **characterized in that** the cover layer (4) completely covers the core layer (3) in the liquid-carrying portion (12) of the fixed flange (1).

9. Sandwich injection moulding method for manufacturing a fixed flange (1) having a flange collar (7) and having a weld connection (5) according to any one of claims 1 to 8, wherein a thermoplastic material for forming a cover layer (4) of the fixed flange (1) as well as subsequently a mechanically firmer, more particularly fibre-reinforced, thermoplastic material compared with this, thermoplastic material to form the core layer (3) of the fixed flange (1), more particularly in the plastic core of the cover layer (4), is introduced into an injection mould via at least one gate mark (9), wherein the cavity portion pertaining to the weld connection (5) is substantially filled with thermoplastic material at least in some regions during the formation of the cover layer (4), wherein the cavity in regions outside the liquid-carrying portion of the fixed flange (1) is cast, **characterized in that** the cavity is cast on the flange collar (7) of the fixed flange (1) in the region of the sealing surface (10).

10. The sandwich injection moulding method according to claim 9, **characterized in that** holes (13) are introduced in the flange collar (7) to form a screw connection (23).

11. The sandwich injection moulding method according to claim 9 or 10, **characterized in that** during or after separation of the gate (9) a recess (24) is introduced in the region of the gate (9) which is provided with a seal (25).

12. The sandwich injection moulding method according to claim 9, 10 or 11, **characterized in that** after introducing the thermoplastic material of the core layer (3), thermoplastic material of the cover layer (4) is again introduced to seal the core layer (3).

## Revendications

1. Bride solidaire avec un composite multicouche (2) fabriqué par moulage par injection en sandwich et présentant au moins une entrée d'injection (9), qui présente au moins par zones une couche centrale (3) composée de préférence d'un thermoplastique, en particulier armé de fibres, et au moins une couche de couverture (4) couvrant la couche centrale (3) et composée d'un thermoplastique, la couche centrale (3) ayant une solidité mécanique supérieure à celle de la couche de couverture (4), avec un collet de bride (7) et avec au moins un raccord soudé (5) formant une surface de joint (14), la bride solidaire (1) se composant pour l'essentiel, au niveau de sa surface de joint (14) plastifiable en vue du soudage, de la couche de couverture (4) et au niveau de son collet de bride (7), pour l'essentiel, du composite multicouches (2), l'entrée d'injection (9) du composite multicouches (2) étant prévue en dehors de la partie acheminant le liquide de la bride solidaire (1), **caractérisée en ce que** l'entrée d'injection (9) se trouve sur le collet de bride (7) au niveau de la surface d'étanchéité (10).

2. Bride solidaire selon la revendication 1, **caractérisée en ce que** le raccord soudé (5), plus fin que le collet de bride (7), se raccorde au moins partiellement au collet de bride (7).

3. Bride solidaire selon la revendication 1 ou 2, **caractérisée en ce que** la couche de couverture (4) se compose de PP-H.

4. Bride solidaire selon la revendication 1, 2 ou 3, **caractérisée en ce que** la bride solidaire (1) présente une garniture d'étanchéité (25) qui assure l'étanchéité de la couche centrale (3) qui s'avance dans la zone de l'entrée d'injection.

5. Bride solidaire selon l'une des revendications 1 à 4, **caractérisée en ce que** le collet de bride (7) présente au niveau de l'entrée d'injection (9) au moins un évidement (24) pour la garniture d'étanchéité (25).

6. Bride solidaire selon l'une des revendications 1 à 5, **caractérisée en ce que** la couche de couverture (4) du collet de bride (7) a une épaisseur réduite au moins au niveau de l'appui de vissage (22) du raccord fileté (23) par rapport à une zone qui s'y raccorde.

7. Bride solidaire selon l'une des revendications 1 à 6, **caractérisée en ce que** le composite multicouches (2) du collet de bride (7) présente une épaisseur augmentée au moins dans la zone de l'appui de vissage (22) du raccord fileté (23) par rapport à une zone qui s'y raccorde.

8. Bride solidaire selon l'une des revendications 1 à 7, **caractérisée en ce que** la couche de couverture (4) couvre complètement la couche centrale (3) dans la partie acheminant le liquide (12) de la bride solidaire (1).

9. Procédé de moulage par injection en sandwich pour la fabrication d'une bride solidaire (1) avec un collet de bride (7) et avec un raccord soudé (5) selon l'une des revendications 1 à 8, dans lequel sont introduits dans un moule de moulage par injection, via au moins une entrée d'injection (9), un thermoplastique pour former une couche de couverture (4) de la bride solidaire (1) puis un thermoplastique ayant une plus grande solidité mécanique que ce thermoplastique et en particulier armé de fibres, pour former une couche centrale (3) de la bride solidaire (1), en particulier dans l'âme plastique de la couche de couverture (4), la partie de la cavité correspondant au raccord soudé (5) étant pour l'essentiel remplie de thermoplastique, au moins par zones, pendant la formation de la couche de couverture (4), la cavité étant remplie avec la coulée dans des zones situées en dehors de la partie acheminant le liquide de la bride solidaire (1), **caractérisé en ce que** la cavité est remplie avec la coulée dans la zone de la surface d'étanchéité (10) sur le collet de bride (7) de la bride solidaire (1).

10. Procédé de moulage par injection en sandwich selon la revendication 9, **caractérisé en ce que** des trous (13) sont formés dans le collet de bride (7) pour former un raccord fileté (23).

11. Procédé de moulage par injection en sandwich selon la revendication 9 ou 10, **caractérisé en ce que** pendant ou après le détachement de l'entrée d'injection (9), un évidement (24) est formé dans la zone de l'entrée d'injection (9) et muni d'une garniture d'étanchéité (25).

12. Procédé de moulage par injection en sandwich selon la revendication 9, 10 ou 11, **caractérisé en ce qu'**après l'introduction du thermoplastique de la couche centrale (3), du thermoplastique de la couche de couverture (4) est à nouveau introduit pour sceller la couche centrale (3).
